Europäisches Patentamt

European Patent Office

Office européen des brevets

(11) Veröffentlichungsnummer: **0 197 535**
**A2**

## (12) EUROPÄISCHE PATENTANMELDUNG

(21) Anmeldenummer: 86104725.6

(22) Anmeldetag: 07.04.86

(51) Int. Cl.4: **G07F 7/10**

(30) Priorität: 09.04.85 DE 3512723

(43) Veröffentlichungstag der Anmeldung:
**15.10.86 Patentblatt 86/42**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Krivachy, Thomas, Dr.-Phil.**
**Buchauerstrasse 39**
**D-8000 München 71(DE)**

(54) **Anordnung zum Eingeben von Daten.**

(57) Das Eingeben von persönlichen Daten erfolgt unter Verwendung einer Chipkarte (K), die außer mindestens einem integrierten Schaltkreis eine Stromversorgung, eine Tastatur (T) zum Eingeben der persönlichen Daten und eine Anzeigeeinheit (A) zum Anzeigen der eingegebenen persönlichen Daten aufweist. Durch die Verwendung dieser Chipkarte (K) wird vermieden, daß die persönlichen Daten von Unbefugten erkannt werden, da keine Eingabe der persönlichen Daten unmittelbar an einem Endgerät mehr erforderlich ist. Die Tastatur (T) kann als numerische oder alphanumerische Tastatur ausgebildet sein und die Chipkarte (K) kann weitere Einrichtungen zum Erkennen von benutzerspezifischen Identifikatoren, wie beispielsweise Fingerabdrücken, Schriftzügen oder ähnlichen enthalten. Die Chipkarte (K) enthält auch einen Zwischenspeicher, um die eingegebenen und verarbeiteten Daten erst zu einem späteren Zeitpunkt auslesen zu können.

FIG 1

EP 0 197 535 A2

Anordung zum Eingeben von Daten

Die Erfindung bezieht sich auf eine Anordnung zum Eingeben von Daten gemäß dem Oberbegriff des Patentanspruchs 1.

Chipkarten als Identifikationskarten sind bereits allgemein bekannt. Die Chipkarten enthalten mindestens einen in tegrierten Schaltkreis, der als Speicherschaltkreis und/oder als Schaltkreis mit Logikfunktionen, beispielsweise als Mikrorechner ausgebildet sein kann.

Bei der Anwendung der Chipkarten werden diese üblicherweise in ein Endgerät eingeführt, das mit einer Rechenanlage verbunden ist. Der Benutzer gibt üblicherweise in das Endgerät Daten ein, wie beispielsweise eine persönliche Identifikationsnummer, die seiner eigenen Chipkarte zugeordnet ist. Um Mißbräuche mit der Chipkarte zu verhindern, bieten die gegenwärtigen Chipkarten bereits ein hohes Maß an Sicherheit. Für manche Anwendungen, insbesondere in der Kreditwirtschaft, bei Zugriffsberechtigung zu Bildschirmtext oder beim Abrufen von Nachrichten bei einem Mitteilungsdienst ist jedoch eine weitere Erhöhung der Sicherheit bei der Weingabe der persönlichen Daten erwünscht. Beispielsweise können vor mit Chipkarten arbeitenden Geldautomaten stehende weitere Personen die von dem Benutzer eingegebene persönliche Identifikationsnummer erkennen oder andere Personen gar unbefugterweise diese Identifikationsnummern in den Geräten zwischenspeichern. Weiterhin besteht die Gefahr, daß möglicherweise die ursprünglich mit der Tastatur an dem Endgerät eingegebenen und zur Chipkarte übertragenen Daten sowie die von der Chipkarte zum Endgerät übertragenen Daten abgespeichert werden.

Häufig ist es erforderlich, Daten in einer Verarbeitungseinheit auf einfache Weise durch zugriffsberechtigte Personen eingeben zu können. Beispielsweise müssen in einem Fertigungsprozeß Daten kurzfristig geändert werden. Dies kann ebenfalls mittels einer Chipkarte erfolgen. Jedoch sind die Daten in den Chipkarten normalerweise nur unter Verwendung eines entsprechenden Endgerätes veränderbar.

Der Erfindung liegt daher die Aufgabe zugrunde, eine Anordnung zum Eingeben von Daten unter Verwendung einer Chipkarte anzugeben, bei der die Daten sehr einfach und mit großer Sicherheit gegen unbefugte Änderung eingegeben werden können.

Erfindungsgemäß wird die Aufgabe bei der Anordnung der eingangs genannten Art durch die im kennzeichnenden Teil des Patentanspruchs 1 angegebenen Merkmale gelöst.

Die Anordnung gemäß der Erfindung hat den Vorteil, daß ein Benutzer die Daten niemals in ein für ihn fremdes Endgerät, wie ein öffentliches Kommunikationsterminal, einen Geldautomaten usw. eingeben muß, da die Eingabe immer über die eigene Chipkarte erfolgt. Weiterhin entfallen die Risiken, die mit der Eingabe von Daten in ein nicht als sicher anzusehendes Endgerät auftreten können. Der grundsätzliche Vorteil der Anordnung ist jedoch, daß die eingegebenen und verarbeiteten Daten ohne Bedienungsfehler über eine maschinengerechte Schnittstelle zum Endgerät übertragen werden. Schließlich besteht ein weiterer Vorteil darin, daß während des Datenaustausches eine von der Rechenanlage veranlaßte und durch die Anordnung gesicherte Überprüfung möglich ist, ob die empfangenen Daten auch von der angegebenen Chipkarte stammen.

Die Tastatur auf der Chipkarte ist vorzugsweise als numerische Tastatur ausgebildet. Sie kann auch als alphanumerische Tastatur ausgebildet sein und zum Eingeben, Verschlüsseln oder Signieren alphanumerischer Daten dienen.

Die in der Chipkarte vorgesehene Verarbeitungseinheit kann auch derart ausgebildet sein, daß sie eingegebene Identifikatoren, wie beispielsweise Fingerabdrücke, Schriftzüge oder die Aufdruckstärke beim Schreiben mit gespeicherten Identifikatoren vergleicht. Insbesondere ist des vorteilhaft, wenn die Verarbeitungseinheit nach einem vorgegebenen Algorithmus eine Verschlüsselung der eingegebenen Daten durchführt.

Um die Ergebnisse, die aus den eingespeicherten Daten nach einem vorgegebenen Algorithmus zwischenzuspeichern und zu einem späteren Zeitpunkt an das Endgerät abzugeben, ist es vorteilhaft, wenn die Chipkarte einen Zwischenspeicher enthält.

Zweckmäßigerweise weist die zusätzlich mit einer Stromversorgung, einer Tastatur und einer Anzeigeeinheit versehene Chipkarte das Format einer üblichen Kreditkarte auf.

Die einzugebenden Daten sind beispielsweise persönliche Daten, für die Steuerung eines Fertigungsprozesses erforderliche Daten oder zu erfassende Daten.

Ein Ausführungsbeispiel der Anordnung gemäß der Erfindung wird im folgenden anhand von Zeichnungen näher erläutert. Es zeigen

Fig. 1 eine Draufsicht auf eine erste Ausführungsform der Chipkarte und

Fig. 2 eine Draufsicht auf eine zweite Ausführungsform der Chipkarte.

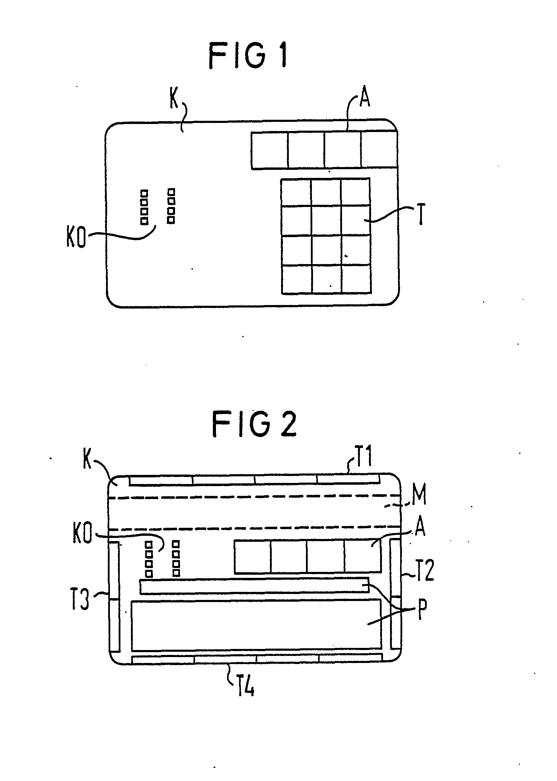

Die in Fig. 1 dargestellte Chipkarte K enthält mindestens einen nicht dargestellten integrierten Schaltkreis, der als Speicherschaltkreis und/oder Schaltkreis mit Logikfunktionen ausgebildet sein kann. Der Zugang zu dem Schaltkreis erfolgt durch Kontakte KO, die an der Oberfläche der Chipkarte K angeordnet sind. Die Chipkarte weist das Format einer üblichen Kreditkarte auf und enthält zusätzlich eine Tastatur T, die als numerische Tastatur oder als alphanumerische Tastatur ausgebildet ist. Weiterhin weist die Chipkarte K eine Anzeigeeinheit A auf, an der die eingegebenen Daten darstellbar sind. Diese Daten sind beispielsweise persönliche Daten, wie beispielsweise Identifikationsnummern. Nach dem Eingeben der persönlichen Daten werden diese auf der Chipkarte K verarbeitet und können dann über ein Endgerät in an sich bekannter Weise einer Rechenanlage zugeführt werden, wobei die Rechenanlage mit dem Endgerät auch eine Einheit bilden kann.

Die Chipkarte K kann zusätzlich zu den Speicherschaltkreisen und einem Schaltkreis mit Logikfunktionen einen Zwischenspeicher enthalten, in dem die eingegebenen und bearbeiteten Daten zwischengespeichert werden und zu einem späteren Zeitpunkt aus der Chipkarte K abgerufen werden können, um sie der Rechenanlage zuzuführen.

Bei der in Fig. 2 dargestellten Chipkarte K ist die Tastatur T in vier Tastatursegmente T1 bis T4 aufgeteilt, die am Rand der Chipkarte K angeordnet sind. Die Chipkarte K enthält in diesem Ausführungsbeispiel zusätzlich einen an sich bekannten Magnetstreifen M und zwei an sich bekannte Prägebereiche P, in denen Daten speicherbar bzw. darstellbar sind. Auch diese Chipkarte K enthält Kontakte KO sowie eine Anzeigeeinheit A.

Die Verarbeitungseinheit in der Chipkarte K kann derart ausgebildet sein, daß sie die eingegebenen persönlichen Daten verschlüsselt, um die Sicherheit der Übertragung der Daten zu der Rechenanlage weiter zu erhöhen. Weiterhin kann die Verarbeitungseinheit derart ausgebildet sein, daß sie einen Vergleich der eingegebenen Identifikatoren wie beispielsweise der persönlichen Identifikationsnummer, Fingerabdrücke oder Schriftzüge sowie die Andruckstärke beim Schreiben überprüft.

In der Chipkarte K kann auch ein Programm zum Verarbeiten der eingegebenen Daten vorgesehen sein. Dieses Programm kann für Anwendungen in der Kreditwirtschaft oder als ein Algorithmus zum Verschlüsseln der zu übertragenden Zugangsberechtigung zu einem system beinhalten.

Die Daten können auch zu erfassende Daten oder Steuerdaten für einen Vorgang sein, so daß beispielswesie in einem Fertigungsprozeß durch eine berechtigte Person Daten auf einfache Weise erfaßt werden können oder Steuerdaten für eine Änderung des normalen Fertigungsvorgangs eingegeben werden können.

Bezugszeichenliste

K Chipkarte

KO Kontakte

T Tastatur

T1 bis T4 Tastatursegmente

A Anzeigeeinheit

M Magnetstreifen

P Prägebereiche

## Ansprüche

1. Anordnung zum Eingeben von persönlichen Daten mittels einer Chipkarte mit mindestens einem integrierten Schaltkreis über ein Endgerät in eine Rechenanlage, **dadurch gekennzeichnet,** daß die Chipkarte (K) eine eigene Stromversorgung, eine Tastatur(T) zum Eingeben der persönlichen Daten und eine Anzeigeeinheit (A) zum Anzeigen der eingegebenen persönlichen Daten aufweist und daß der integrierte Schaltkreis eine Verarbeitungseinheit zum Verarbeiten der eingegebenen Daten nach einem vorgegebenen Algorithmus enthält.

2. Anordnung nach Anspruch 1, **dadurch gekennzeichnet,** daß die Verarbeitungseinheit eine Verschlüsselung der eingegebenen Daten durchführt.

3. Anordnung nach Anspruch 1 oder Anspruch 2, **dadurch gekennzeichnet,** daß die Tastatur (T) als numerische Tastatur ausgebildet ist.

4. Anordnung nach Anspruch 1 oder Anspruch 2, **dadurch gekennzeichnet ,** daß die Tastatur (T) als alphanumerische Tastatur ausgebildet ist.

5. Anordnung nach einem der Ansprüche 1 bis 4, **dadurch gekennzeichnet,** daß die Verarbeitungseinheit eine Verarbeitung von eingegebenen Identifikatoren durchführt.

6. Anordnung nach einem der Ansprüche 1 bis 5, **dadurch gekennzeichnet,** daß die Chipkarte (K) einen Zwischenspeicher zum Zwischenspeichern von Ergebnissen, die aus den eingegebenen persönlichen Daten nach einem vorgegebenen Algorithmus ermittelt werden und zum Aufruf zu einem späteren Zeitpunkt enthält.

7. Anordnung nach einem der Ansprüche 1 bis 6, **dadurch gekennzeichnet**, daß die Chipkarte (K) das Format einer üblichen Kreditkarte aufweist.

8. Anordnung nach einem der Ansprüche 1 bis 7, **dadurch gekennzeichnet**, daß als Daten persönliche Daten vorgesehen sind.

0 197 535

FIG 1

FIG 2